# EUROPEAN PATENT SPECIFICATION

(11) **EP 3 862 579 B1**
(45) Date of publication and mention of the grant of the patent: **10.09.2025**
(21) Application number: 20156340.0
(22) Date of filing: 10.02.2020
(51) Int. Cl.: F16B 5/02, F16B 5/06

(54) **TOLERANCE COMPENSATION SUPPORT**
UNTERSTÜTZUNG DER TOLERANZKOMPENSATION
SUPPORT DE COMPENSATION DE TOLÉRANCE

(43) Date of publication of application: 11.08.2021
(73) Proprietor: Magna Electronics Sweden AB, 447 37 Vårgårda (SE)
(72) Inventor: CODREANU, Cezar, 700051 Iasi (RO)
(74) Representative: Reichert & Lindner Partnerschaft Patentanwälte

(56) References cited:
- EP-A1- 3 318 770
- US-A- 3 627 362

## Description

### FIELD OF THE INVENTION

The invention relates to an assembly comprising a housing defined by a housing base and a housing cover; a camera to be mounted in the housing; and a tolerance compensation support for the camera to be mounted in the housing.

### DESCRIPTION OF THE BACKGROUND ART

EP 0 648 944 A1 is directed to a plastic connecting element with a retaining region which holds a part and with a fastening region which is to be connected to a support. A tolerance is provided between the part and the support to be compensated for. The retaining region and the fastening region are connected by at least two spiral-shaped elastic arms for compensating for the tolerance in the directions lying in the plane of the support.

US 4,505,611 A discloses an upholstery fixing device. The fixing consists of a bracket having a holdfast suspended therefrom with bendable or flexible straps. In use, the bracket is riveted to the back of a trim board, and the holdfast is pushed into an associated aperture of an inside panel of a car door. Then the bendable straps can be yieldingly bent to automatically reduce any misalignment between a fixed bracket (and hence its holdfast) and an associated aperture of the inside panel of the car door, thus facilitating the fixing of the upholstery to the inside panel of the car door in exact registration.

DE 35 35 527 A1 discloses a support ring for fixing a body in a packaging sleeve. The support ring consists of at least two support ring parts which abut one another at axial separating surfaces. To achieve tolerance compensation, each support ring half has support fingers which are elastic in the radial direction. The support fingers are preferably arranged near to the separating surfaces.

US 3,627,362 A discloses a continuous spline as a component to be aligned by an elastic seat. The seat and the spline have teeth to allow a secure mounting of the spline itself and of a constructional component. The constructional component is mounted to the portion of the spline which is accessible from the outside.

In general, assemblies for tolerance compensation require some special features. For example, the surfaces, getting in contact with the component, require a very good dimensional tolerance. This causes a raise in the overall product price.

### SUMMARY OF THE INVENTION

It is an object of the present invention to provide an assembly with a tolerance compensation support for a camera, which is self-adjusting, avoids special features for the tolerance compensation, is easy to manufacture and inexpensive.

The above object is achieved by an assembly with a tolerance compensation support which comprises the features of claim 1.

The tolerance compensation support for a camera (component) to be mounted according to the invention comprises a first part and a second part. The first part has a first support structure with a seat for a first part of the component. The second part has a second support structure with a seat for a second part of the component. The first part and the second part each have a first frame element and a second frame element being connected to the first support structure and the second support structure respectively by at least one elastic element.

The advantage of the present invention is that the tolerance compensation support is self-adjusting in that the first frame element and the second frame element allow a movement of the first support structure and the second support structure respectively of the tolerance compensation support. The tolerance issue is solved by the component position.

The component is assembled between parts, for example between a housing base and a housing cover of an ECU.

Preferably, the first part and the second part of the tolerance compensation support is designed such that both are suitable for a plastic injection molding process. The first part and the second part of the tolerance compensation support can be manufactured such that two direction extraction can be used.

In an embodiment, the seat for the first part of the component is formed complementary to outer dimensions of the first part of the component. The seat for the second part of the component is formed complementary to the outer dimensions of the second part of the component.

The advantage is that the geometry of the seats can be modified in order to accommodate any component, which needs to be mounted in a form-fitting manner. According to the invention, the component is a camera.

According to a preferred embodiment of the invention, the first frame element and the second frame element are connected to the first support structure and the second support structure respectively by two elastic elements. Preferably, the elastic elements (living hinge) compensate at least the tolerances in two directions, for example, in a horizontal and vertical direction.

According to the invention, the first part and the second part of the tolerance compensation support are part of a housing. The housing itself comprises at least a housing base and a housing cover.

According to the invention, a frame is part of the housing and holds the first part and the second part of the tolerance compensation support. Preferably, the frame width can be modified as well to accommodate any other requirements.

According to the invention, for mounting the first part and the second part, slots are formed in the housing base and the housing cover. The slots are adapted to hold and position the first part and the second part respectively. Preferably, the slots have a width which is identical to a width of the first frame element and/or the second frame element of the first part and the second part respectively. The advantage of the slots in the housing base and the housing cover is that they have a geometry which is easy to manufacture in the housing base and/or the housing cover. Additionally, no screws or other features are needed to restrain the first part and/or the second part of the tolerance compensation support in the housing.

In an embodiment, the elastic elements, connecting the first frame element and the second frame element to the first support structure and the second support structure respectively, enable a movement of the first support structure and the second support structure.

In an embodiment, the first part and the second part of the tolerance compensation support are injection moulded from polymer and have a simple manufacture geometry, which result in an inexpensive part. The geometry of the first support structure and the second support structure is easy to adapt for more types of components that need to be mounted in the same way (for example, a sandwich between the housing base and the housing cover). Moreover, the design of the first support structure and the second support structure enable the plastic tolerance compensation support to compensate for tolerances from any direction.

### BRIEF DESCRIPTION OF THE DRAWINGS

The numerous advantages of the disclosure may be better understood by those skilled in the art by reference to the accompanying figures in which:
**Figure 1** is a schematic representation of a first part of a tolerance compensation support according to an embodiment of the invention mounted on a housing base.
**Figure 2** is a schematic representation of a second part of the tolerance compensation support according to an embodiment of the invention mounted on a housing cover.
**Figure** 3 is a top view of the first part and the second part of the tolerance compensation support according to an embodiment of the invention.
**Figure 4** is a schematic view of the first part or the second part of the tolerance compensation support, mounted in a frame.
**Figure 5** is a top view of the first part or the second part mounted in the housing base or housing cover.
**Figure 6** is an enlarged view of the first part or the second part, showing the possible movements for carrying out the tolerance compensation.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be construed as a limitation of the invention.

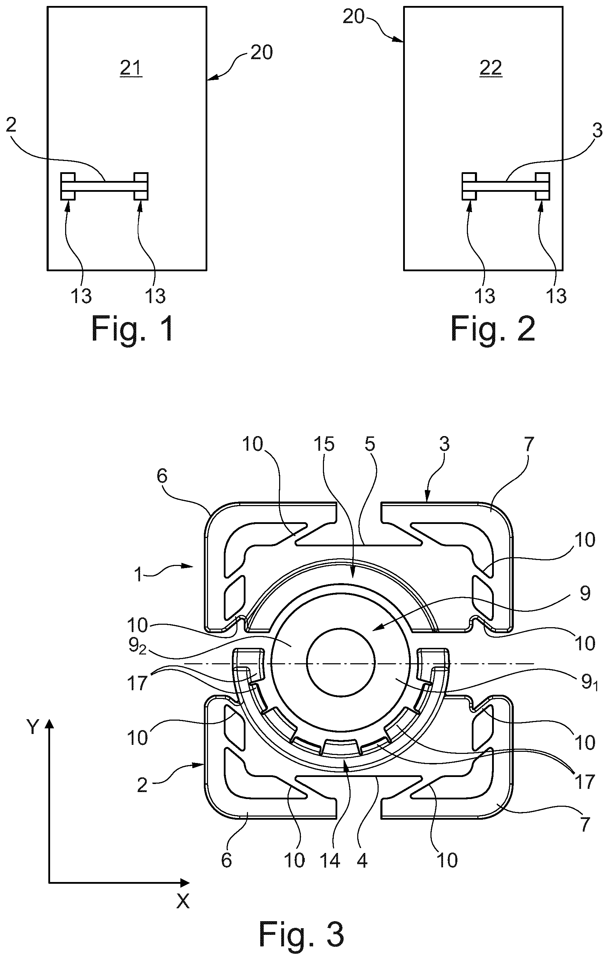

**Figure 1** shows a schematic representation of a housing base 21 of a housing 20, and **Figure 2** shows a schematic representation of a housing cover 22 of the housing 20. The housing 20 incorporates an embodiment of the present invention and is used, for example, to house an electronic control unit (ECU). The tolerance compensation support 1 (see Figure 3) of the present invention is composed of a first part 2 and a second part 3. The first part 2 is positioned with slots 13 in the housing base 21. The second part 3 is as well positioned with slots 13 in the housing cover 22.

**Figure 3** shows a top view of a tolerance compensation support 1 according to an embodiment of the invention which has a first part 2 and a second part 3. The first part 2 has a first support structure 4 which provides a seat 14 for a first part 9₁ of a component 9 to be mounted or positioned by the tolerance compensation support 1. In the embodiment shown, the seat 14 of the first support structure 4 has the complementary form of the first part 9₁ of the component 9 to be mounted. The first support structure 4 is suspended by elastic elements 10 which connect the first support structure 4 to a first frame element 6 and a second frame element 7 of first part 2.

The second part 3 has a second support structure 5 which provides a seat 15 as well for a second part 9₂ of the component 9 to be mounted or positioned by the tolerance compensation support 1. The seat 15 of the second support structure 5 has the complementary form of the second part 9₂ of the component 9 to be mounted. The second support structure 5 is suspended by elastic elements 10 which connect the second support structure 5 to a first frame element 6 and a second frame element 7 of second part 3.

The form of the component 9, as shown in Figure 3 is, for example, round and regular. Consequently, the geometry of the seat 14 of the first support structure 4 and the geometry (circular shape) of the seat 15 of the second support structure 5 are identical. In the embodiment shown here, the circular shape of the seat 14 of the first support structure 4 carries a plurality of holding elements 17. The holding elements 17 cooperate with the component 9 to be mounted in a form and force fitting manner. The geometry shown in Figure 3 of both seats 14, 15 should not be construed as a limitation of the invention. The geometry of the seats 14, 15 can be modified so that the first support structure 4 and the second support structure 5 can accommodate any outer form of the component 9.

The elastic elements 10 which connect the first frame element 6 and the second frame element 7 to the first support structure 4 and the second support structure 5, respectively, enable a movement of the first support structure 4 and the second support structure 5. The movement of the first support structure 4 and the second support structure 5 allows to compensate tolerances in one direction or at least one plane, see for example the exemplary plane spanned by a horizontal axis X and a vertical axis Y.

As shown in Figure 1, the tolerance compensation support 1 is positioned in a housing 20. The first part 2 of the tolerance compensation support 1 is assembled in the housing base 21, and the second part 3 of the tolerance compensation support 1 is assembled in the housing cover 22. The housing cover 22 is placed on the housing base 21, thereby placing the component 9 between the seat 14 of the first support structure 4 and the seat 15 of the second support structure 5 and thus compensating for tolerances.

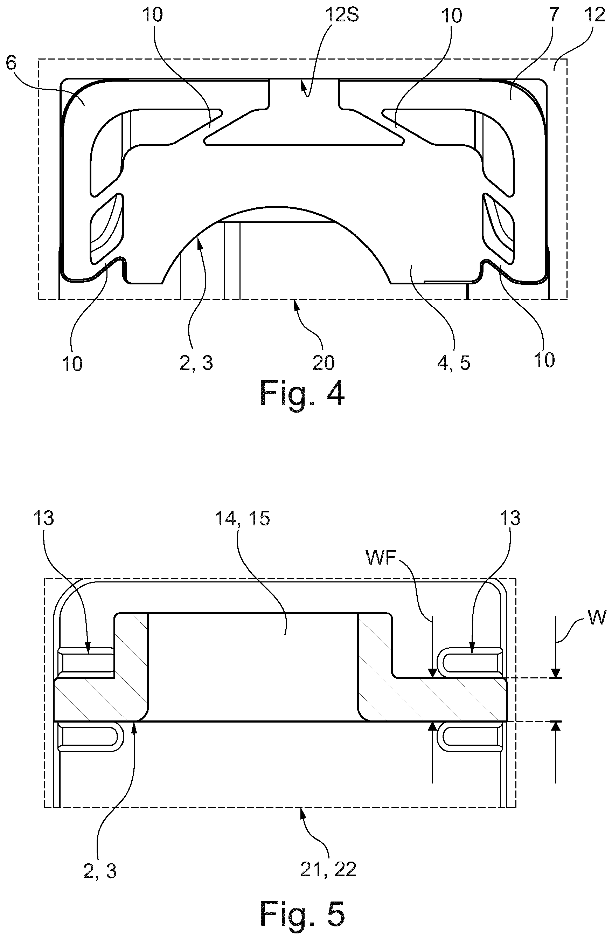

**Figure 4** shows an embodiment of mounting the first part 2 and the second part 3 of the tolerance compensation support 1. Here, the first part 2 or the second part 3 of the tolerance compensation support 1 are mounted in a frame 12. The first frame element 6 and the second frame element 7 of the first part 2 and the second part 3, respectively, lie against an inner surface 12S of the frame 12. The elastic elements 10, which connect the first frame element 6 and the second frame element 7 to the first support structure 4 and the second support structure 5, respectively, enable a movement of the first support structure 4 and the second support structure 5 within the rigid fame 12.

**Figure 5** shows a top view of an embodiment of mounting the first part 2 or the second part 3 in the housing base 21 or housing cover 22. The housing base 21 and the housing cover 22 have slots 13 formed, which accommodate the first frame element 6 and the second frame element 7, respectively. Each slot 13 has a width W which is of the same size as the width WF of the first frame element 6 and the second frame element 7. With the above described mounting, the first part 2 or the second part 3 can be fixed in the housing base 21 or housing cover 22 without the need of screws or other features to restrain the first part 2 or the second part 3 in housing 20. In the mounted state, the component 9 is in contact with the seats 14 and 15 in a form-fitting manner.

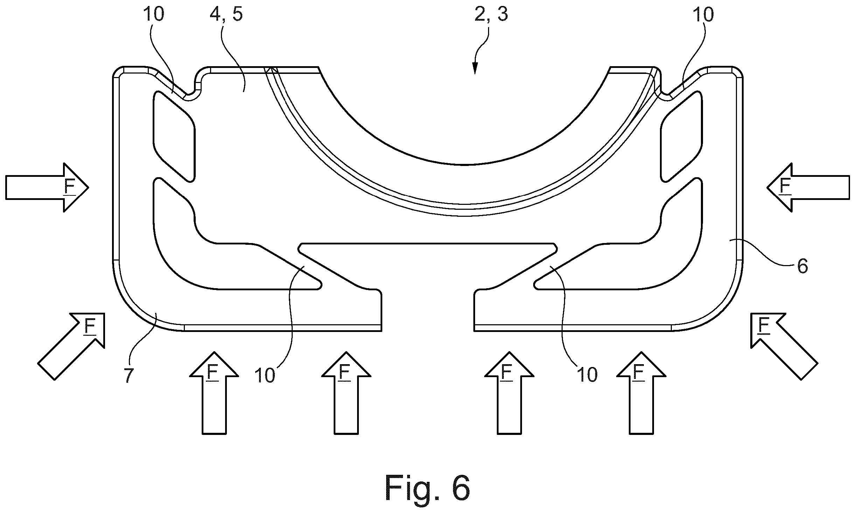

**Figure 6** is an enlarged view of the first part 2 or the second part 3, showing the possible movements for carrying out the tolerance compensation. External forces F, generated due to the mounting of the first part 2 or the second part 3, act against the first frame element 6 and the second frame element 7. The acting forces F cause a movement of the first support structure 4 and the second support structure 5 via at least one elastic element 10. The movement of the first support structure 4 and the second support structure 5 enable a tolerance compensation of the component to be mounted.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: Tolerance compensation support
- 2: First part
- 3: Second part
- 4: First support structure
- 5: Second support structure
- 6: First frame element
- 7: Second frame element
- 9: Component
- 9₁: First part of the component
- 9₂: Second part of the component
- 10: Elastic element
- 12: Frame
- 12S: Inner surface
- 13: Slot
- 14: Seat
- 15: Seat
- 17: Holding element
- 20: Housing
- 21: Housing base
- 22: Housing cover
- F: Force
- W: Width
- WF: Width of frame element
- X: Horizontal axis
- Y: Vertical axis

## Claims

1. An assembly comprising
a housing (20) defined by a housing base (21) and a housing cover (22);
a camera (9) to be mounted in the housing (20);
a tolerance compensation support (1) for the camera (9) to be mounted in the housing (20);
a first part (2) having a first support structure (4) with a seat (14) for a first part (9₁) of the camera (9);
a second part (3) having a second support structure (5) with a seat (15) for a second part (9₂) of the camera (9);
a first frame element (6) and a second frame element (7) of the first part (2) mounted in slots (13) of the housing base (21);
a first frame element (6) and a second frame element (7) of the second part (3) mounted in slots (13) of the housing cover (22); and
the first frame element (6) and the second frame element (7) of the first part (2) and the second part (3) being connected to the first support structure (4) and the second support structure (5), respectively, by at least one elastic element (10).

2. The assembly as claimed in claim 1, wherein the seat (14) for the first part (9₁) of the camera (9) is formed complementary to the first part (9₁) of the camera (9), and the seat (15) for the second part (9₂) of the camera (9) is formed complementary to the second part (9₂) of the camera (9).

3. The assembly as claimed in any one of the preceding claims, wherein the first frame element (6) and the second frame element (7) are connected to the first support structure (4) and the second support structure (5), respectively, by two elastic elements (10).

4. The assembly as claimed in claim 1, wherein the slots (13) of the housing base (21) and the housing cover (22) are adapted for holding and positioning the first part (2) and the second part (3), respectively.

5. The assembly as claimed in claim 1, wherein the slots (13) have a width (W) identical to a width (WF) of the first frame element (6) and the second frame element (7).

6. The assembly as claimed in any one of the preceding claims, wherein the elastic elements (10) connecting the first frame element (6) and the second frame element (7) to the first support structure (4) and the second support structure (5), respectively, enable a movement of the first support structure (4) and the second support structure (5).

7. The assembly as claimed in claim 6, wherein the elastic elements (10) support mounting of the camera (9) in a form and force fitting manner by the first support structure (4) and the second support structure (5), respectively, once the housing base (21) and the housing cover (22) of the housing (20) are mounted.

8. The assembly as claimed in any one of the preceding claims, wherein the first part (2) and the second part (3) of the tolerance compensation support (1) are injection moulded.

## Patentansprüche

1. Eine Baugruppe umfassend
ein Gehäuse (20), das durch einen Gehäuseboden (21) und einen Gehäusedeckel (22) definiert ist;
eine Kamera (9), die in das Gehäuse (20) eingebaut wird;
einen Toleranzkompensationsträger (1) für die Kamera (9) zur Montage im Gehäuse (20);
ein erstes Teil (2) mit einer ersten Stützstruktur (4) mit einem Sitz (14) für ein erstes Teil (9₁) der Kamera (9);
ein zweites Teil (3) mit einer zweiten Stützstruktur (5) mit einem Sitz (15) für ein zweites Teil (9₂) der Kamera (9);
ein erstes Rahmenelement (6) und ein zweites Rahmenelement (7) des ersten Teils (2), das in Schlitzen (13) des Gehäusebodens (21) montiert ist;
ein erstes Rahmenelement (6) und ein zweites Rahmenelement (7) zweiten Teils (3), das in Schlitzen (13) des Gehäusedeckels (22) montiert ist;
wobei das erste Rahmenelement (6) und das zweite Rahmenelement (7) des ersten Teils (2) und des zweiten Teils (3) jeweils über mindestens ein elastisches Element (10) mit der ersten Stützstruktur (4) bzw. der zweiten Stützstruktur (5) verbunden sind.

2. Die Baugruppe nach Anspruch 1, wobei der Sitz (14) für das erste Teil (9₁) der Kamera (9) komplementär zum ersten Teil (9₁) der Kamera (9) ausgebildet ist und der Sitz (15) für das zweite Teil (9₂) der Kamera (9) komplementär zum zweiten Teil (9₂) der Kamera (9) ausgebildet ist.

3. Die Baugruppe nach einem der vorhergehenden Ansprüche, wobei das erste Rahmenelement (6) und das zweite Rahmenelement (7) jeweils durch zwei elastische Elemente (10) mit der ersten Stützstruktur (4) bzw. der zweiten Stützstruktur (5) verbunden sind.

4. Die Baugruppe nach Anspruch 1, wobei die Schlitze (13) des Gehäusebodens (21) und des Gehäusedeckels (22) zum Halten und Positionieren des ersten Teils (2) bzw. des zweiten Teils (3) ausgebildet sind.

5. Die Baugruppe nach Anspruch 1, wobei die Schlitze (13) eine Breite (W) aufweisen, die mit einer Breite (WF) des ersten Rahmenelements (6) und des zweiten Rahmenelements (7) identisch ist.

6. Die Baugruppe nach einem der vorhergehenden Ansprüche, wobei die elastischen Elemente (10), die das erste Rahmenelement (6) und das zweite Rahmenelement (7) mit der ersten Stützstruktur (4) bzw. der zweiten Stützstruktur (5) verbinden, eine Bewegung der ersten Stützstruktur (4) und der zweiten Stützstruktur (5) ermöglichen.

7. Die Baugruppe nach Anspruch 6, wobei die elastischen Elemente (10) die form- und kraftschlüssige Montage der Kamera (9) durch die erste Tragstruktur (4) bzw. die zweite Tragstruktur (5) unterstützen, sobald der Gehäuseboden (21) und der Gehäusedeckel (22) des Gehäuses (20) montiert sind.

8. Die Baugruppe nach einem der vorhergehenden Ansprüche, wobei das erste Teil (2) und das zweite Teil (3) des Toleranzkompensationsträgers (1) spritzgegossen sind.

## Revendications

1. Un assemblage comprenant
un boîtier (20) défini par une base de boîtier (21) et un couvercle de boîtier (22) ;
une caméra (9) à monter dans le boîtier (20) ;
un support de compensation de tolérance (1) pour la caméra (9) à monter dans le boîtier (20) ;
une première partie (2) comportant une première structure de support (4) avec un siège (14) pour une première partie (9₁) de la caméra (9) ;
une deuxième partie (3) comportant une deuxième structure de support (5) avec un siège (15) pour une deuxième partie (9₂) de la caméra (9)
un premier élément de cadre (6) et un deuxième élément de cadre (7) de la première partie (2) montée dans des fentes (13) de la base de boîtier (21) ;
un premier élément de cadre (6) et un deuxième élément de cadre (7) de la deuxième partie (3) montée dans des fentes (13) du couvercle de boîtier (22) ;
le premier élément de cadre (6) et le deuxième élément de cadre (7) de la première partie (2) et de la deuxième partie (3) sont reliés à la première structure de support (4) et à la deuxième structure de support (5), respectivement, par au moins un élément élastique (10).

2. L'assemblage selon la revendication 1, dans lequel le siège (14) pour la première partie (9₁) de la caméra (9) est formé en complément de la première partie (9₁) de la caméra (9), et le siège (15) pour la deuxième partie (9₂) de la caméra (9) est formé en complément de la deuxième partie (9₂) de la caméra (9).

3. L'assemblage selon l'une quelconque des revendications précédentes, dans lequel le premier élément de cadre (6) et le deuxième élément de cadre (7) sont reliés à première structure de support (4) et à la deuxième structure de support (5), respectivement, par deux éléments élastiques (10).

4. L'assemblage selon la revendication 1, dans lequel les fentes (13) de la base de boîtier (21) et du couvercle de boîtier (22) sont adaptées au maintien et au positionnement de la première partie (2) et de la deuxième partie (3), respectivement.

5. L'assemblage selon la revendication 1, dans lequel les fentes (13) ont une largeur (W) identique à une largeur (WF) du premier élément de cadre (6) et du deuxième élément de cadre (7).

6. L'assemblage selon l'une quelconque des revendications précédentes, dans lequel les éléments élastiques (10) reliant le premier élément de cadre (6) et le deuxième élément de cadre (7) à la première structure de support (4) et à la deuxième structure de support (5), respectivement, permettent un mouvement de la première structure de support (4) et de la deuxième structure de support (5).

7. L'assemblage selon la revendication 6, dans lequel les éléments élastiques (10) soutiennent le montage de la caméra (9) par coopération de formes et de forces par la première structure de support (4) et la deuxième structure de support (5), respectivement, une fois que la base de boîtier (21) et le couvercle de boîtier (22) du boîtier (20) sont montés.

8. L'assemblage selon l'une quelconque des revendications précédentes, dans lequel la première partie (2) et la deuxième partie (3) du support de compensation de tolérance (1) sont moulées par injection.
